# FASCICULE DE BREVET EUROPEEN

(11) **EP 1 642 050 B1**
(45) Date de publication et mention de la délivrance du brevet: **14.03.2007**
(21) Numéro de dépôt: 03780230.3
(22) Date de dépôt: 20.10.2003
(51) Int. Cl.: F16H 61/02, F16H 59/02, B60R 16/02

(54) **ARCHITECTURE ELECTRIQUE D UN DISPOSITIF DE SELECTION DE VITE SSES POUR UNE BOITE DE VITESSES AUTOMATIQUE**
SCHALTUNGSARCHITEKTUR EINES GANGSCHALTERS FÜR EIN AUTOMATISCHES GETRIEBE
ELECTRICAL ARCHITECTURE OF A GEAR SELECTION DEVICE FOR AUTOMATIC GEARBOX

(30) Priorité: 18.10.2002 FR 0212998
(43) Date de publication de la demande: 05.04.2006
(73) Titulaire: Renault s.a.s., 92100 Boulogne Billancourt (FR)
(72) Inventeur: ARDUINI, Alain, F-91640 Vaugrigneuse (FR); DUEZ, Valérie, 78280 Guyancourt (FR)
(86) Numéro de dépôt international: PCT/FR2003/003116
(87) Numéro de publication internationale: WO 2004/036090

(56) Documents cités:
- US-A- 4 875 391
- US-A- 5 861 803
- US-A1- 2002 007 979

## Description

L'invention concerne une architecture électrique d'un dispositif électronique de sélection de vitesses pour une boîte de vitesses automatique ou robotisée dans un véhicule automobile.

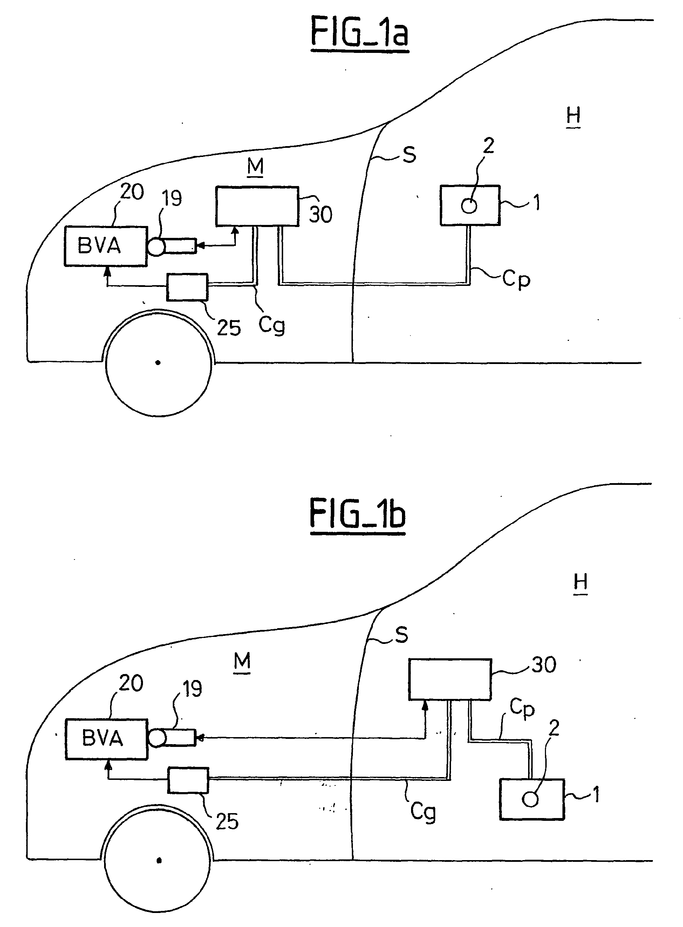

Plus particulièrement, elle se rapporte à un dispositif de sélection de vitesses décrit dans la demande de brevet français déposée sous le No. 0 202852, au nom de la Demanderesse, caractérisé par un levier fixé au volant et comportant une manette permettant au conducteur de choisir un des quatre modes de fonctionnement de la boîte de vitesses automatique, de choisir le mode de gestion automatique ou manuelle de la boîte et un des rapports de vitesse en mode manuel. Cette manette est associée à un module électronique de sélection de vitesses déterminant les positions successives de la manette imposées par le conducteur et pilotant l'actionneur électrique de sélection du mode de fonctionnement de la boîte de vitesses automatique, ces informations étant ensuite transmises à un module de commande de la boîte automatique pilotant les changements de rapports. La manette est représentée sur la figure 1 et les autres composants électroniques sont sur la figure 4 de cette demande.

Un tel dispositif a été conçu pour pallier les inconvénients des dispositifs de commande électrique existants, tels que celui décrit dans la publication JP 4 817 471 équipé de nombreux boutons destinés à offrir de multiples possibilités de sélection de vitesses pour une boîte de vitesses automatique. Ce dispositif suppose une architecture électrique constituée d'un ensemble de liaisons filaires, d'entrées logiques de contact, d'entrées analogiques converties en entrées numériques par des interfaces électroniques et de sorties de commande entre différents modules externes, et un module de commande appelé « logic control unit ». Ces modules externes délivrent des informations sur la vitesse du véhicule, la position des pédales d'accélérateur et de frein, le levier de sélection de vitesses entre autres, nécessaires à la commande électrique, ce qui les oblige à posséder une adaptation électronique pour transformer des signaux fréquentiels en signaux numériques à envoyer au module de commande. Toutes ces informations logiques sont traitées dans ce module de commande pour piloter un moteur électrique et un électro-aimant de la boîte de vitesses automatique, ce qui nécessite beaucoup de contacts avec le câblage associé entre ce module et différents modules externes.

Le document, US 2002/0007979 décrit une architecture électrique selon le préambule de la revendication 1 et/ou 2.

Toutes ces liaisons augmentent le câblage dans le véhicule, qui possède par ailleurs d'autres modules de commande en vue de plusieurs autres applications nécessitant des microprocesseurs et des liaisons inter-systèmes délicates à mettre en place. En effet, il faut prévoir des interfaces électroniques pour adapter les impédances d'entrée.

L'inconvénient de l'architecture électrique de ce dispositif actuel réside dans l'augmentation du coût et de la difficulté à adapter ce type de solution à d'autres types de transmission. De plus, ce module de commande avec sélection de vitesses ne peut être implanté que dans l'habitacle du véhicule.

Le dispositif de sélection de vitesses pour une boîte automatique, objet de la demande de brevet au nom de la Demanderesse, résout ces problèmes en présentant différentes possibilités d'implantation des modules électroniques par rapport au module de commande de la boîte et au levier de sélection de vitesses près du volant.

Ce module de sélection de vitesses peut être implanté soit dans le compartiment moteur sous capot, soit dans l'habitacle du véhicule, le levier étant situé dans l'habitacle près du volant, et le module de commande de la boîte de vitesses automatique comme l'actionneur électrique de sélection du mode de fonctionnement de la boîte étant situés sous le capot moteur.

L'objet de l'invention est une architecture électrique d'un dispositif électronique de sélection de vitesses pour boîte de vitesses automatique ou robotisée d'un véhicule automobile, comprenant notamment un levier près du volant, un module électronique de sélection de vitesses pilotant l'actionneur électrique de sélection du mode de fonctionnement et un module électronique de commande de la boîte de vitesses automatique, caractérisé en ce que le levier et le module de sélection de vitesses sont connectés par une liaison électrique spécifique, et en ce que la liaison entre ledit module de sélection de vitesses et le module de commande de la boîte de vitesses automatique est assurée par le réseau CAN multiplexé du véhicule et la liaison entre le module de sélection de vitesses et l'actionneur est assurée par un réseau filaire.

Selon une autre caractéristique, la liaison électrique spécifique entre le levier et le module de sélection de vitesses est réalisée par un réseau CAN privatif avec un protocole particulier.

Selon une autre caractéristique, la liaison électrique spécifique entre le levier et le module de sélection de vitesses est réalisée par un réseau filaire et le levier communique avec le module de commande de la boîte de vitesses automatique par un autre réseau filaire.

Un autre objet de l'invention est une architecture électrique d'un dispositif électronique de vitesses pour boîte de vitesses automatique ou robotisée, caractérisée en ce que le levier de sélection, le module de sélection de vitesses de la boîte de vitesses et le module de commande de la boîte de vitesses communiquent par le réseau CAN général multiplexé du véhicule et en ce que la liaison entre le module de sélection et l'actionneur de sélection de vitesses de la boîte de vitesses automatique est assurée par un réseau filaire.

Selon une autre caractéristique, le module de sélection de vitesses de la boîte de vitesses automatique est implanté soit dans le compartiment moteur, soit dans l'habitacle du véhicule.

D'autres caractéristiques et avantages de l'invention apparaîtront à la lecture de la description de plusieurs modes d'architectures, illustrée par les figures suivantes qui sont:
- les figures 1a et 1b : deux modes d'implantation différents du module de sélection de rapport selon une première architecture électrique ;
- les figures 2a et 2b : deux modes d'implantation différents du module de sélection de rapport selon une deuxième architecture électrique ;
- les figures 3a et 3b : deux modes d'implantation différents du module de sélection de rapport selon une troisième architecture électrique.

Les éléments portant les mêmes références sur les différentes figures remplissent les mêmes fonctions en vue des mêmes résultats.

Les deux modes d'implantation du module 30 de sélection de vitesses de la boîte de vitesses automatique sont l'un dans le compartiment moteur M (figures 1 a, 2a, 3a), l'autre dans l'habitacle H du véhicule (figures 1b, 2b, 3b) pour les trois architectures possibles. Comme le montrent ces six figures, la séparation S entre le compartiment moteur M et l'habitacle H est représentée par une courbe.

Dans le compartiment moteur sous capot, le module électronique de sélection de vitesses 30, qui comprend une unité de commande destinée à déterminer les positions successives de la manette 2 au bout du levier 1, sélectionnées par le conducteur, est placé à proximité de la boîte de vitesses automatique 20 et donc de l'actionneur électrique 19 implanté directement sur la boîte de vitesses, entre lesquels s'échangent entre autres les informations de position de l'actionneur et les alimentations de commande en puissance (figure 1a). Le module 30 de sélection de vitesses peut bénéficier dans ce cas du câblage moteur, par liaison courte, du module 25 de commande de la boîte de vitesses automatique, ce qui diminue les courants de fuite et améliore la qualité du signal. L'actionneur électrique nécessite un fort courant sur une durée très courte, de sorte que les fils d'alimentation sont de grosse section et l'impédance varie suivant la longueur. Ainsi, plus la liaison est courte, plus l'impédance est basse et plus les courants de fuite sont faibles autorisant des signaux de commande de très courte durée qui sont corrects. Selon cette implantation, la liaison entre le levier 1 et le module 30 de sélection de vitesses traverse le tablier séparant le compartiment moteur de l'habitacle.

Dans le cas d'une implantation dans l'habitacle du véhicule (figure 1b), les conditions de fonctionnement sont moins dures car les contraintes d'environnement sur l'étanchéité, la chaleur, la poussière ou les vibrations par exemple, sont moins importantes et le module 30 de sélection de vitesses est relié d'une part par une liaison spécifique à l'actionneur électrique 19 de la boîte de vitesses automatique et d'autre part par une autre liaison au module 25 de commande de la boîte de vitesses automatique. Selon cette implantation, la liaison entre le levier 1 et le module 30 de sélection ne traverse pas le tablier, mais ce sont les liaisons entre ce module 30 d'une part et le module 25 de commande et l'actionneur électrique 19 d'autre part qui le traversent. Il faut veiller à une bonne implantation de ces fils d'alimentation dans le toron qui traverse le tablier, car les signaux de commande de l'actionneur générés peuvent entraîner des perturbations électromagnétiques sur les liaisons d'autres modules passant par ce toron.

Dans les trois architectures électriques, les deux modules électroniques 25 et 30 communiquent par le réseau CAN - Car Area Network- général au véhicule, sur lequel transitent, selon un protocole de codage déterminé, toutes les informations électroniques des modules électroniques de commande, essentiels au fonctionnement du véhicule, tels que les calculateurs d'injection, d'assistance au freinage ou ceux liés à la climatisation, au coussin gonflable de sécurité appelé « airbag ». Ce réseau CAN, référencé C_{g} sur les figures, renseigne sur leurs états, en temps réel, tout module de commande connecté à ce réseau et qui le demande. Cela demande un certain nombre de fils supplémentaires pour les alimentations et la puissance à fournir à l'actionneur réalisant un câblage spécifique à la boîte de vitesses automatique. Quant à la liaison entre le module de sélection 30 et l'actionneur électrique 19 de la boîte de vitesses, elle est réalisée par un réseau filaire de longueur déterminée pour minimiser l'impédance des fils pouvant atténuer le signal de commande. Le choix entre les deux modes d'implantation dépend du compromis entre les conditions de fonctionnement et la longueur du câblage entre les différents éléments du dispositif.

Selon la première architecture électrique qui est représentée par les figures 1a et 1b, le levier de sélection 1 situé au volant et le module électronique 30 de sélection de vitesses de la boîte de vitesses automatique communiquent par un réseau CAN privatif Cₚ. Dans le cas de la figure 1a, le module 30 de sélection est dans le compartiment moteur M et la liaison qui le relie au levier traverse le tablier S séparant ce compartiment moteur de l'habitacle. Dans le cas de la figure 1b, le module 30 de sélection est dans l'habitacle H et leur liaison est plus courte. Par contre, les liaisons entre le module 30 de sélection d'une part et l'actionneur électrique 19 et le module de commande 25 de la boîte de vitesses d'autre part doivent traverser le tablier S.

Dans le cas de cette première architecture, l'unité électronique d'adaptation des signaux 16 et l'unité de commande 17 avec microprocesseur, placées dans le module électronique 30 de sélection de vitesse de la demande de brevet FR 0 202 852, sont logées dans le levier de commande 1, alors que l'unité de puissance 18 qui transforme les informations de pilotage de l'actionneur 19 en signaux de puissance pour mettre en mouvement le moteur électrique de l'actionneur reste dans le module 30. Le rôle dudit module de sélection est donc seulement de piloter l'actionneur 19 pour positionner la boîte de vitesses automatique au mode de fonctionnement choisi P, R, N ou D, en retour l'unité de puissance recevant la position exacte de l'actionneur au moyen d'un capteur électronique.

Les informations qui transitent par ce réseau CAN privatif doivent respecter un protocole particulier, proche de celui du réseau CAN général C_{g}, avec une occurrence particulière, par exemple totalement indépendante de celle du réseau CAN du véhicule et beaucoup plus rapide. Ainsi, une information émise par le levier 1 est transmise au module de sélection 30, par exemple toutes les 5 ms, sans risque de surcharge pour le bus. Ce module de sélection de vitesses 30 doit posséder un second réseau CAN pour être en liaison avec le module 25.

Les informations délivrées par le levier 1 sont transmises uniquement au module de sélection de vitesses 30 par ce réseau CAN privatif et le renseignent sur les changements de fonctionnement choisis « Parking, Reserve, Neutral, Drive » ou sur la commande manuelle impulsionnelle, appelée aussi « Tiptronic », et sur l'état des éléments composant le levier, tels que les capteurs ou les alimentations.

La demande de la commande manuelle impulsionnelle par le conducteur, dont le principal destinataire est le module 25 de commande de la boîte de vitesses automatique, exige une prise en compte rapide et est donc transmise avec une occurrence, toutes les 5 ms, plus soutenue que le changement de rapports en version automatique, qui est une information répétée toutes les 20 ms. Cela permet de réduire au minimum le retard introduit par le fait de faire transiter l'information par le module de sélection 30 avant d'aboutir au module 25 de commande de la boîte de vitesses automatique.

Le module 30 de sélection de vitesses reçoit les ordres du levier 1, pilote l'actionneur électrique 19 pour positionner la boîte de vitesses automatique au mode de fonctionnement choisi « Parking, Reserve, Neutral, Drive » ou sur la commande manuelle « MANUEL » avec les ordres d'incrémenter ou décrémenter les rapports de boîte, et envoie par le réseau CAN véhicule toutes ces informations nécessaires au module 25. Ce dernier commande les éléments de puissance de la boîte automatique pour changer de rapports, gère le mode de fonctionnement choisi - automatique ou manuel - et assure les liaisons avec les autres modules du véhicule par le réseau CAN. Principalement, il dialogue avec le module électronique du tableau de bord dans le but d'afficher la position de la boîte et le rapport de boîte. Dans le cas où le conducteur choisit une autre position par l'intermédiaire du levier 1, cette nouvelle position est affichée sur le tableau de bord du véhicule tout d'abord par un signal clignotant jusqu'à ce que l'actionneur électrique atteigne cette position puis par un signal fixe. Un signal d'alarme, sonore par exemple, avertit le conducteur en cas de fausse manoeuvre. En cas de défaut existant sur un des éléments de la boîte ou sur les différents modules, un signal lumineux prévient le conducteur.

Le module 30 de sélection renseigne également le réseau CAN véhicule sur le diagnostic du levier 1, du module 30 lui-même, de l'actionneur 19 de la boîte de vitesses automatique et du CAN, et demande ou non la levée du blocage du levier en mode « Parking» - appelé « shiftlock» -.

Cette première architecture électrique présente l'avantage de sécuriser les informations qui circulent sur le réseau CAN privatif comme sur le réseau CAN général du véhicule, car d'une part les données qui circulent par ces réseaux suivent un protocole strict qui réduit au maximum le risque d'erreurs impromptues sur le réseau, et d'autre part le câblage de ces réseaux CAN bénéficie d'une protection renforcée des câbles électriques.

Selon cette architecture, le nombre de fils reliant le levier 1 au module 30 de sélection de vitesses se réduit à deux pour le réseau CAN privatif au lieu de sept nécessaires, comme dans le mode de réalisation décrit par exemple dans la demande de brevet français déposée sous le No. 0 202852. Ce réseau est alors moins sujet aux perturbations électromagnétiques et le nombre de pannes éventuelles en est réduit. Le réseau CAN privatif a l'avantage de pouvoir transférer les informations entre le levier 1 et le module 30 très rapidement avec un temps de traitement court sans gêner la communication du réseau CAN véhicule.

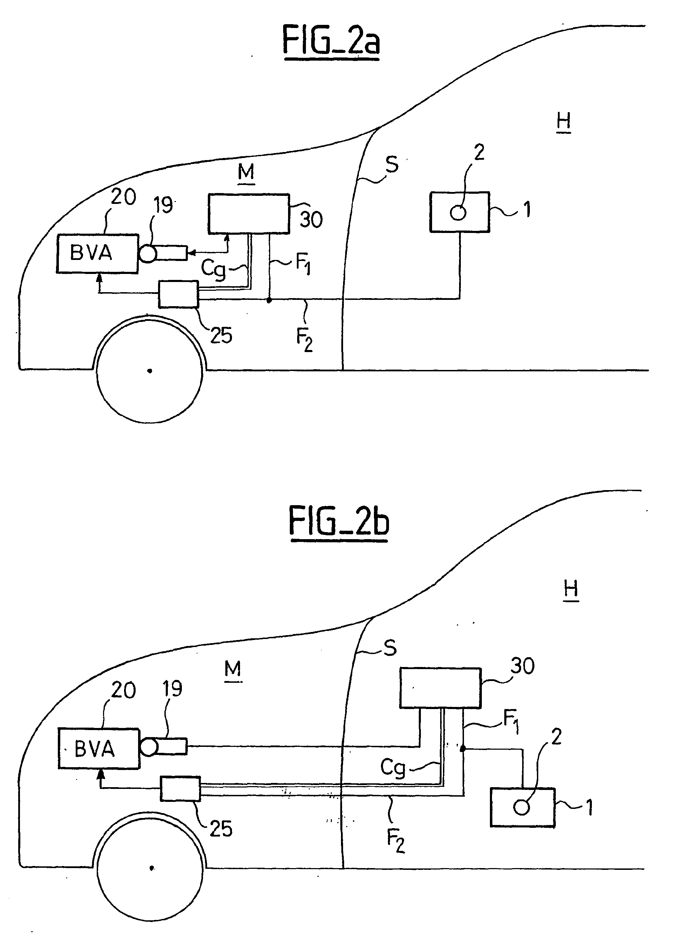

Selon une deuxième architecture électrique représentée schématiquement par les figures 2a et 2b, le levier 1 de sélection de vitesses de la boîte automatique situé au volant communique par un réseau filaire F₁ avec le module électronique 30 de sélection de rapport de la boîte de vitesses automatique et par un autre réseau filaire F₂ avec le module 25 de commande de la boîte de vitesses automatique.

Dans le cas où le module de sélection 30 est placé dans le compartiment moteur M (figure 2a), les réseaux filaires F₁ et F₂ traversent le tablier S le séparant de l'habitacle. Dans le cas où le module de sélection 30 est placé dans l'habitacle H (figure 2b), seul le réseau F₁ entre le levier 1 et le module 30 ne traverse pas le tablier, car les liaisons entre le levier 1 et le module de commande 25, entre le module 30 de sélection et le module 25 de commande, et entre le module 30 de sélection et l'actionneur électrique 19 doivent traverser ledit tablier.

Le module électronique 30 de sélection est constitué des trois unités décrites dans la demande de brevet français déposée sous le No. 0 202852 : l'unité d'adaptation de signaux, l'unité de commande et l'unité de puissance.

Dans ce cas, les informations du type logique ou analogique, qui transitent par les fils n'ont pas de protocole ni d'occurrence particuliers à respecter, de telle sorte que les informations émises par le levier, sur le mode de fonctionnement choisi pour la boîte de vitesses automatique, P, N, R ou D, ou sur le mode de gestion automatique ou manuelle de la boîte, sont immédiatement disponibles et transmises au module électronique concerné, sans subir de temps de retard dû au rafraîchissement de trame existant sur le réseau CAN multiplexé. Pour assurer une bonne fiabilité de l'architecture électrique, il est nécessaire de diagnostiquer l'état de chaque fil et d'effectuer des redondances d'informations.

Les informations délivrées par le levier 1 de sélection de vitesses sont transmises d'une part au module 30 de sélection en ce qui concerne les changements de mode de fonctionnement de la boîte de vitesses automatique (P, R, N ou D), le pilotage de l'actionneur électrique 19 de la boîte et l'état des alimentations, et d'autre part au module 25 de commande de la boîte de vitesses automatique en ce qui concerne les demandes de la commande manuelle impulsionnelle en gestion manuelle de la boîte. Cette liaison directe entre le levier 1 de sélection de vitesses et le module 25 de commande ne présente aucun retard qui pourrait être dû à un passage par le module 30 de sélection.

Comme pour la première architecture électrique, le module 30 de sélection autorise ou non les ordres du conducteur pour piloter l'actionneur électrique et transmet par le réseau CAN la position du levier de sélection et de l'actionneur au module 25 de commande de la boîte de vitesses automatique. Celui-ci autorise ou non, à son tour, les ordres du conducteur pour changer les rapports en mode manuel en fonction des positions de l'actionneur, demande ou non la levée du « shift lock », permet ou non au module de sélection 30 d'effectuer le déplacement de l'actionneur et transfert les informations, par le réseau CAN, aux autres modules du véhicule pour afficher notamment la position de l'actionneur 19 et du levier de sélection 1 ou le rapport de boîte en cours.

Cette deuxième architecture électrique présente les avantages suivants. Tout d'abord, les ordres de commande impulsionnelle transmis par le conducteur sont interprétés très rapidement pour décider et changer de rapport de boîte, alors que les temps de traitement des informations par le réseau CAN véhicule sont beaucoup plus longs. Ensuite, le levier 1 de sélection n'est constitué que de composants élémentaires, tels que des capteurs ou des interrupteurs par exemple, ne nécessitant pas de microprocesseur pour gérer les informations analogiques reçues et pour transmettre par le réseau CAN les informations numériques correspondantes au module 30 de sélection, ce qui réduit son coût. Enfin, le module 30 n'a besoin que d'une cellule de dialogue avec le réseau CAN.

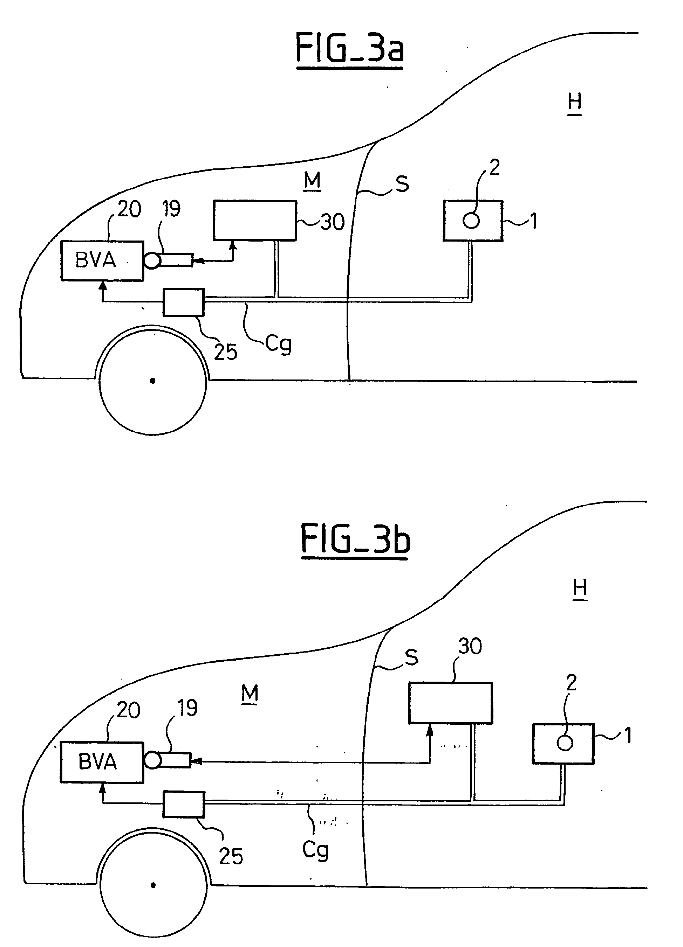

Selon une troisième architecture électrique, représentée schématiquement par les figures 3a et 3b, le levier 1 de sélection, le module 30 de sélection de vitesses de la boîte de vitesses automatique et celui 25 de commande de la boîte de vitesses automatique communiquent par le réseau CAN général du véhicule. Pour que le levier traduise électriquement les demandes que le conducteur exerce par l'intermédiaire de la manette 2, l'unité électronique d'adaptation des signaux et l'unité de commande qui sont intégrées dans le module 30 de sélection selon les architectures précédentes doivent être intégrées au levier qui devient ainsi intelligent. Ces deux unités d'adaptation et de commande sont implantées sur le circuit imprimé logé dans le corps du levier. La liaison entre le module 30 de sélection et l'actionneur 19 de sélection du rapport de la boîte de vitesses automatique est assurée par un réseau filaire.

Les informations délivrées par le levier de sélection 1 et transmises par le réseau CAN multiplexé du véhicule sont disponibles à tous les calculateurs, mais les informations sur les changements de mode P, R, N, D de la boîte de vitesses automatique et l'état des alimentations sont destinées au module 30 de sélection pour piloter l'actionneur électrique 19 de la boîte de vitesses automatique et les informations sur les demandes de la commande manuelle impulsionnelle concernent le module 25 de commande de la boîte de vitesses automatique. Le retard d'informations venant du levier est partagé entre ces deux modules 25 et 30. La boîte de vitesses accepte ou refuse les ordres donnés par le module de sélection 30 selon son état et le module de commande 25 peut envoyer directement au tableau de bord du véhicule les informations de changement de rapports de boîte ou l'état des positions P, R, N, D ou la commande manuelle qui sont disponibles sur le réseau CAN, ce qui supprime le retard qui serait dû à un passage par le module de sélection 30.

Dans cette troisième architecture, le nombre de fils entre le levier 1 et le module 30 est réduit à deux pour le réseau CAN véhicule au lieu de sept nécessaires, comme dans le mode de réalisation décrit par exemple dans la demande de brevet français déposée sous le No. 0 202852. Ce réseau est alors moins sujet aux perturbations électromagnétiques et le nombre de pannes éventuelles en est réduit. Le protocole de communication par le réseau CAN est le même pour tous les modules et les informations transférées sur le réseau sont lisibles par tous les modules externes.

## Revendications

1. Architecture électrique d'un dispositif électronique de sélection de vitesses pour boîte de vitesses automatique ou robotisée, comprenant notamment un levier près du volant, un module électronique de sélection de vitesses pilotant l'actionneur de sélection de vitesses de la boîte de vitesses automatique et un module de commande de la boite de vitesses automatique, **caractérisée en ce que** le levier (1) et le module (30) de sélection de vitesses sont connectés par une liaison électrique spécifique, réalisée par un réseau CAN privatif (Cₚ) avec un protocole particulier et **en ce que** la liaison entre ledit module (30) de sélection de vitesses et le module (25) de commande de la boîte de vitesses automatique est assurée par le réseau CAN multiplexé (C_{g}) du véhicule et la liaison entre le module (30) de sélection de vitesses et l'actionneur (19) de sélection du rapport de la boîte de vitesses automatique est assurée par un réseau filaire.

2. Architecture électrique d'un dispositif électronique de sélection de vitesses pour boîte de vitesses automatique ou robotisée, comprenant notamment un levier près du volant, un module électronique de sélection de vitesses pilotant l'actionneur de sélection de vitesses de la boite de vitesses automatique et un module de commande de la boîte de vitesses automatique, **caractérisée en ce que** le levier (1) et le module (30) de sélection de vitesses sont connectés par une liaison électrique spécifique, réalisée par un réseau filaire (F₁) le levier (1) communiquant avec le module (25) de commande de la boîte de vitesses automatique par un autre réseau filaire (F₂), et **en ce que** la liaison entre ledit module (30) de sélection de vitesses et le module (25) de commande de la boîte de vitesses automatique est assurée par le réseau CAN multiplexé (C_{g}) du véhicule et la liaison entre le module (30) de sélection de vitesses et l'actionneur (19) de sélection du rapport de la boîte de vitesses automatique est assurée par un réseau flaire.

3. Architecture électrique selon l'une des revendications 1 ou 2, **caractérisée en ce que** le module (30) de sélection de vitesses de la boîte de vitesses automatique est implanté dans le compartiment moteur (M) sous capot, ainsi que le module (25) de commande de la boîte de vitesses automatique et l'actionneur (19), et **en ce que** la liaison entre ledit module (30) de sélection et le levier (1) situé dans l'habitacle du véhicule traverse le tablier (S) séparant l'habitacle (H) du compartiment moteur (M).

4. Architecture électrique selon l'une des revendications 1 ou 2, **caractérisée en ce que** le module (30) de sélection de vitesses de la boîte de vitesses automatique est implanté dans l'habitacle (H) du véhicule comme le levier (1) et **en ce que** les liaisons entre ledit module (30) et d'une part le module (25) de commande et d'autre part l'actionneur (19) de la boîte de vitesses automatique traversent le tablier (S) séparant l'habitacle (H) du compartiment moteur (M).

5. Architecture électrique selon la revendication 1, **caractérisée en ce que** les informations qui transitent par ledit réseau CAN privatif (Cₚ) respectent un protocole particulier, proche de celui du réseau CAN général (C_{g}), avec une occurrence particulière, totalement indépendante de celle du réseau CAN du véhicule et plus rapide.

6. Architecture électrique selon ta revendication 1, **caractérisée en ce que** la demande de la commande manuelle impulsionnelle effectuée par le conducteur, destinée principalement au module (25) de commande de la boîte de vitesses automatique, exige une prise en compte rapide et est transmise avec une occurrence plus soutenue que le changement de rapports en version automatique.

7. Architecture électrique selon la revendication 1, **caractérisée en ce que** le nombre de fils reliant le levier (1) au module (30) de sélection de vitesses de la boîte de vitesses se réduit à deux pour le réseau CAN privatif (Cₚ).

## Claims

1. Electrical architecture of an electronic gear selection device for an automatic or robotized gearbox, comprising in particular a lever close to the steering wheel, an electronic gear selection module controlling the gear selection actuator of the automatic gearbox and an automatic gearbox control module, **characterized in that** the lever (1) and the gear selection module (30) are connected by a specific electrical link, produced by a private CAN network (Cₚ) with a special protocol, and **in that** the connection between the said gear selection module (30) and the automatic gearbox control module (25) is provided by the multiplexed CAN network (C_{g}) of the vehicle and the connection between the gear selection module (30) and the ratio selection actuator (19) of the automatic gearbox is provided by a wired network.

2. Electrical architecture of an electronic gear selection device for an automatic or robotized gearbox, comprising in particular a lever close to the steering wheel, an electronic gear selection module controlling the gear selection actuator of the automatic gearbox and an automatic gearbox control module, **characterized in that** the lever (1) and the gear selection module (30) are connected by a specific electrical link, produced by a wired network (F₁), the lever (1) communicating with the automatic gearbox control module (25) though another wired network (F₂), and **in that** the connection between the said gear selection module (30) and the automatic gearbox control module (25) is provide by the multiplexed CAN network (C_{g}) of the vehicle and the connection between the gear selection module (30) and the ratio selection actuator (19) of the automatic gearbox is provided by a wired network.

3. Electrical architecture according to one of Claims 1 or 2, **characterized in that** the gear selection module (30) of the automatic gearbox is installed in the engine compartment (M) under the bonnet, as well as the automatic gearbox control module (25) and the actuator (19), and **in that** the connection between the said selection module (30) and the lever (1) situated in the passenger compartment of the vehicle passes through the dashboard (S) separating the passenger compartment (H) from the engine compartment (M).

4. Electrical architecture according to one of Claims 1 or 2, **characterized in that** the gear selection module (30) of the automatic gearbox is installed in the passenger compartment (H) of the vehicle as is the lever (1) and **in that** the connections between the said module (30) and, on the one hand, the control module (25) and, on the other hand, the automatic gearbox actuator (19) pass through the dashboard (S) separating the passenger compartment (H) from the engine compartment (M).

5. Electrical architecture according to Claim 1, **characterized in that** the data which pass through the said private CAN network (Cₚ) comply with a special protocol, close to that of the general CAN network (Cg), with a particular occurrence, totally independent from and faster than that of the CAN network of the vehicle.

6. Architecture according to Claim 1, **characterized in that** the request of the manual pulse control made by the driver, intended principally for the automatic gearbox control module (25), requires a rapid taking into account and is transmitted with a more sustained occurrence than the ratio change in the automatic version.

7. Electrical architecture according to Claim 1, **characterized in that** the number of wires connecting the lever (1) to the gear selection module (30) of the gearbox is reduced to two for the private CAN network (Cₚ).

## Patentansprüche

1. Elektrische Schaltungsarchitektur eines elektronischen Gangschalters für ein automatisches oder automatisiertes Getriebe, umfassend insbesondere einen Hebel in der Nähe des Lenkrads, ein elektronisches Gangschaltmodul, das den Gangschaltbetätiger des automatischen Getriebes steuert, und ein Steuermodul des automatischen Getriebes, **dadurch gekennzeichnet, dass** der Hebel (1) und das Gangschaltmodul (30) über eine spezifische elektrische Verbindung, welche durch ein ausschließendes CAN-Netzwerk (Cₚ) mit einem besonderen Protokoll realisiert ist, verbunden sind und dass die Verbindung zwischen dem Gangschaltmodul (30) und dem Steuermodul (25) des automatischen Getriebes durch das CAN-Multiplex-Netzwerk (C_{g}) des Fahrzeugs sichergestellt ist, und die Verbindung zwischen dem Gangschaltmodul (30) und dem Betätiger (19) der Übersetzungsauswahl des automatischen Getriebes durch ein Leitungsnetzwerk sichergestellt wird.

2. Elektrische Schaltungsarchitektur eines elektronischen Gangschalters für ein automatisches oder automatisiertes Getriebe, umfassend insbesondere einen Hebel in der Nähe des Lenkrads, ein elektronisches Gangschaltmodul, das den Gangschaltbetätiger des automatischen Getriebes steuert, und ein Steuermodul des automatischen Getriebes, **dadurch gekennzeichnet, dass** der Hebel (1) und das Gangschaltmodul (30) über eine spezifische elektrische Verbindung, welche durch ein Leitungsnetzwerk (F1) realisiert ist, verbunden sind, wobei der Hebel (1) über ein Leitungsnetzwerk (F2) mit dem Steuermodul (25) des automatischen Getriebes kommuniziert, und dass die Verbindung zwischen dem Gangschaltmodul (30) und dem Steuermodul (25) des automatischen Getriebes durch das CAN-Multiplex-Netzwerk (Cg) des Fahrzeugs sichergestellt ist, und die Verbindung zwischen dem Gangschaltmodul (30) und dem Betätiger (19) der Übersetzungsauswahl des automatischen Getriebes durch ein Leitungsnetzwerk sichergestellt wird.

3. Elektrische Schaltungsarchitektur nach Anspruch 1 oder 2, **dadurch gekennzeichnet, dass** das Gangschaltmodul (30) des automatischen Getriebes ebenso wie das Steuermodul (25) des automatischen Getriebes und der Betätiger (19) in den Motorraum (M) unter der Motorhaube eingesetzt sind und dass die Verbindung zwischen dem Gangschaltmodul (30) und dem in dem Fahrraum des Fahrzeugs angeordneten Hebel (1) die den Fahrraum (H) von dem Motorraum (M) trennende Wand (S) durchquert.

4. Elektrische Schaltungsarchitektur nach Anspruch 1 oder 2, **dadurch gekennzeichnet, dass** das Gangschaltmodul (30) des automatischen Getriebes wie der Hebel (1) in den Fahrraum (H) des Fahrzeugs eingesetzt ist und dass die Verbindungen zwischen dem Modul (30) und dem Steuermodul (25) einerseits und dem Betätiger (19) des automatischen Getriebes andererseits, die den Fahrraum (H) von dem Motorraum (M) trennende Wand (S) durchqueren.

5. Elektrische Schaltungsarchitektur nach Anspruch 1, **dadurch gekennzeichnet, dass** die das ausschließende CAN-Netzwerk (Cp) durchlaufenden Informationen einem besonderen Protokoll, das nahe dem des allgemeinen CAN-Netzwerks (Cg) ist, mit einem schnelleren, von dem des CAN-Netzwerks des Fahrzeugs vollkommen unabhängigen Ansprechen, entsprechen.

6. Elektrische Schaltungsarchitektur nach Anspruch 1, **dadurch gekennzeichnet, dass** die durch den Fahrer ausgeführte impulsive manuelle Steueranforderung, die hauptsächlich für das Steuermodul (25) des automatischen Getriebes bestimmt ist, eine schnellere Berücksichtigung fordert und mit einem verstärkteren Ansprechen als die Übersetzungsänderung in die automatische Version übertragen wird.

7. Elektrische Schaltungsarchitektur nach Anspruch 1, **dadurch gekennzeichnet, dass** die Anzahl von Leitungen, die den Hebel (1) mit dem Gangschaltmodul (30) des Getriebes verbinden, für das ausschließende CAN-Netzwerk (Cp) auf zwei reduziert wird.
